# EUROPEAN PATENT SPECIFICATION

(11) **EP 3 547 199 B1**
(45) Date of publication and mention of the grant of the patent: **22.09.2021**
(21) Application number: 18790337.2
(22) Date of filing: 26.04.2018
(51) Int. Cl.: G06F 21/62, H04L 9/32, H04L 29/06

(54) **CONSENSUS VERIFICATION METHOD AND DEVICE**
VERFAHREN UND VORRICHTUNG ZUR KONSENSVERIFIZIERUNG
PROCÉDÉ ET DISPOSITIF DE VÉRIFICATION DE CONSENSUS

(30) Priority: 28.04.2017 CN 201710292517
(43) Date of publication of application: 02.10.2019
(73) Proprietor: Advanced New Technologies Co., Ltd., George Town, Grand Cayman KY1-9008 (KY)
(72) Inventor: TANG, Qiang, Hangzhou, Zhejiang 311121 (CN)
(74) Representative: Fish & Richardson P.C.
(86) International application number: PCT/CN2018/084624
(87) International publication number: WO 2018/196813

(56) References cited:
- CN-A- 106 375 317
- CN-A- 106 385 315
- CN-A- 106 411 901
- CN-A- 106 503 098
- CN-A- 107 392 040
- GB-A- 2 539 430
- Github: "Quorum Whitepaper", , 22 November 2016 (2016-11-22), XP055496924, Retrieved from the Internet: URL:https://github.com/jpmorganchase/quoru m-docs/raw/master/Quorum%20Whitepaper%20v0 .1.pdf [retrieved on 2018-08-02]
- Shehar Bano ET AL: "SoK: Consensus in the Age of Blockchains", , 15 April 2015 (2015-04-15), XP055513744, Retrieved from the Internet: URL:https://pdfs.semanticscholar.org/919e/ 32847097416aada92dff7c8274cd9ca55582.pdf [retrieved on 2018-10-09]

## Description

### TECHNICAL FIELD

The present application relates to the field of blockchain technologies, and in particular, to a consensus verification method and device.

### BACKGROUND

A blockchain network is also referred to as a distributed ledger network, and is characterized by decentralization, openness, and transparency. Each blockchain node synchronizes with a blockchain. The blockchain network includes blockchain nodes. Each blockchain node can both initiate a transaction request and participate in consensus verification on the transaction request.

An existing consensus verification method is as follows: A blockchain node that participates in a transaction broadcasts a transaction request for the transaction to each consensus node in a blockchain network. The consensus node is a blockchain node responsible for consensus verification, and the transaction request includes transaction data of the transaction. Each consensus node stores the transaction data in a blockchain after the consensus verification performed by each consensus node on the transaction request succeeds.

However, each blockchain node can synchronize with the blockchain to obtain transaction data of each transaction stored in the blockchain. Consequently, the privacy included in the transaction data of a blockchain node that participates in the transaction is easy to be disclosed. UK patent application GB2539430 is further prior art.

### SUMMARY

Implementations of the present application provide a consensus verification method and device, to alleviate the problem that when using an existing consensus verification method, the privacy of a blockchain node that participates in a transaction is easy to be disclosed.

To alleviate the previous technical problem, the implementations of the present application are implemented as follows:

An implementation of the present application provides a consensus verification method, where the method includes the following: obtaining, by a regulatory node, a transaction request, where the transaction request includes transaction data and a signature of at least one transaction node; determining whether the transaction request is valid based on the transaction data and a signature of each transaction node; and if the transaction request is valid, generating a digest based on specified data included in the transaction data, and sending the digest and non-specified data included in the transaction data to each consensus node, so that each consensus node performs consensus verification.

An implementation of the present application provides a consensus verification device, where the device includes the following: a first acquisition module, configured to obtain a transaction request, where the transaction request includes transaction data and a signature of at least one transaction node; and a determining and processing module, configured to determine whether the transaction request is valid based on the transaction data and a signature of each transaction node; and if the transaction request is valid, generate a digest based on specified data included in the transaction data, and send the digest and non-specified data included in the transaction data to each consensus node, so that each consensus node performs consensus verification.

It can be seen from the technical solutions provided in the implementations of the present application that, in the implementations of the present application, the regulatory node is responsible for verifying whether the transaction request is valid. If the transaction request is valid, the regulatory node generates the digest based on the specified data in the transaction data, and sends the digest and the non-specified data included in the transaction data to each consensus node for consensus verification. Each consensus node stores the digest and the non-specified data in a blockchain after the consensus verification succeeds. As such, the consensus node receives no specified data, and therefore does not store the specified data in the blockchain. As a result, the specified data is not disclosed. In addition, the digest can be used to verify whether the specified data that is not stored in the blockchain is tempered with.

### BRIEF DESCRIPTION OF DRAWINGS

To describe the technical solutions in the implementations of the present application or in the existing technology more clearly, the following briefly describes the accompanying drawings required for describing the implementations or the existing technology. Apparently, the accompanying drawings in the following description merely show some implementations of the present application, and a person of ordinary skill in the art can still derive other drawings from these accompanying drawings without creative efforts.
FIG. 1 is a flowchart illustrating a consensus verification method, according to an implementation of the present application;
FIG. 2 is a schematic diagram illustrating a blockchain network, according to an implementation of the present application;
FIG. 3 is a schematic diagram illustrating a blockchain network, according to an implementation of the present application; and
FIG. 4 is a schematic diagram illustrating a consensus verification device, according to an implementation of the present application.

### DESCRIPTION OF IMPLEMENTATIONS

Implementations of the present application provide a consensus verification method and device. The invention is defined in the appended claims.

To make a person skilled in the art understand the technical solutions in the present application better, the following clearly and comprehensively describes the technical solutions in the implementations of the present application with reference to the accompanying drawings in the implementations of the present application. Apparently, the described implementations are merely some but not all of the implementations of the present application.

The technical solutions provided in the implementations of the present application are described in detail below with reference to the accompanying drawings.

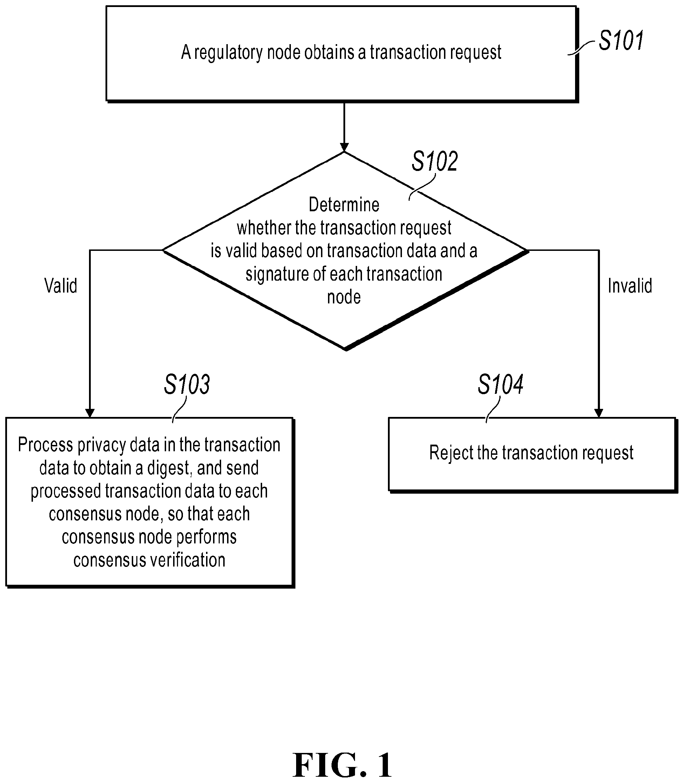

FIG. 1 is a flowchart illustrating a consensus verification method, according to an implementation of the present application. The method includes the following steps.

S101. A regulatory node obtains a transaction request.

The method is performed by the regulatory node. The regulatory node is a blockchain node responsible for regulating transactions. The regulatory node has public trust, and items verified by the regulatory node are acknowledged by blockchain nodes in the whole network.

In a blockchain network, a blockchain node that participates in a transaction is a transaction node, and a blockchain node that participates in a consensus is a consensus node. It is worthwhile to emphasize that a blockchain node can be both a transaction node and a consensus node, and can not only participate in a transaction but also participate in consensus verification on the transaction.

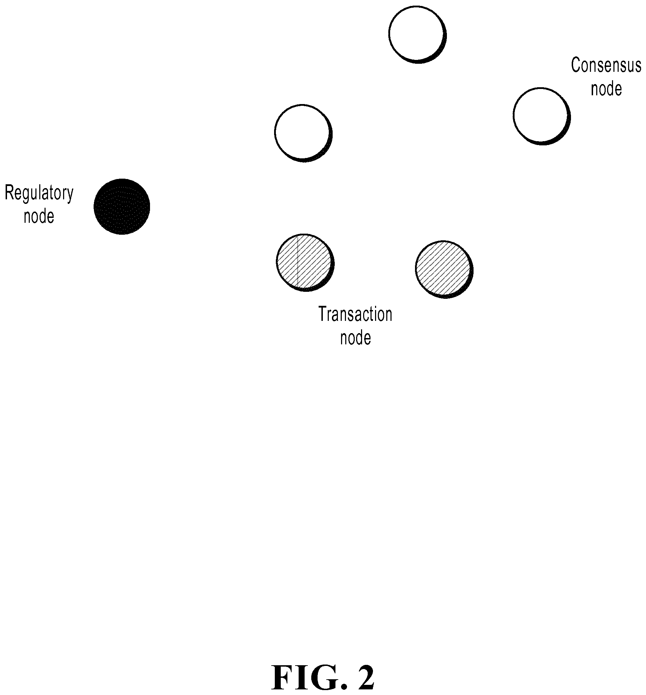

FIG. 2 is a schematic diagram illustrating a blockchain network, according to an implementation of the present application. As shown in FIG. 2, a black blockchain node is a regulatory node. A white blockchain node is a consensus node. A shaded node is a transaction node, and can also participate in consensus verification.

In the present implementation of the present application, the transaction request includes transaction data and a signature of at least one transaction node. The transaction node can be a blockchain node that pays out an asset in a transaction. A blockchain node that accepts an asset in a transaction can also be the transaction node described in the present application. For ease of description, descriptions are provided below by using an example that the transaction node is a blockchain node that pays out an asset in a transaction. In addition, the present application sets no limitation on whether the transaction node is also a consensus node at the same time.

The transaction data is detailed data of a transaction, such as an identity of the transaction node, detailed content of an asset involved in the transaction, an asset number of an asset involved in the transaction, and an account address of the transaction node.

In the present implementation of the present application, the signature of the transaction node is generated by the transaction node for the transaction data, and is used as a proof and record that the transaction node approves the transaction data. If a transaction node approves transaction data of a transaction that the transaction node participates in, in order to reserve a proof and record of the transaction subsequently, the transaction node can first construct a digest of the transaction data based on a digest algorithm, and further process the digest of the transaction data through a signature algorithm and a private key to generate a signature of the transaction node.

It is worthwhile to note that there may be a plurality of digest algorithms, but a common feature of the digest algorithms is that previous plaintext cannot be inversely derived from a digest obtained by calculating plaintext. If there is any modification to the plaintext, a digest obtained by calculating the modified plaintext can also be different. It can be seen that the digest of the transaction data can be used as a unique identifier of the transaction data to identify each transaction. Therefore, if the transaction node signs the transaction data, it can indicate that the transaction node approves the transaction data, and accordingly the transaction node can be prevented from subsequently denying the transaction data.

In the present implementation of the present application, in the transaction request, the signature of the transaction node corresponds to an asset number of an asset used by the transaction node in the transaction data. The transaction node uses the signature to declare the asset number of the asset used by the transaction node. The transaction node enables the signature of the transaction node and the asset number used by the transaction node to form a particular data structure, for example, "asset number 001 (signature A)"; or can use another method to establish a mapping relationship between the signature and the asset number used by the transaction node. Certainly, the asset number that corresponds to the signature of the transaction node is not necessarily an asset number actually owned by the transaction node. In other words, the transaction node may maliciously and fraudulently use an asset number owned by another node. How to avoid the risk is a part of the following description of verifying the validity of the transaction request.

In the present implementation of the present application, one transaction request can include signatures of a plurality of transaction nodes. That is, any transaction node can collect signatures of transaction nodes, generate a transaction request, and send the transaction request to the regulatory node. A method for collecting the signatures can be as follows: Transaction data is transmitted among the transaction nodes in order, each transaction node attaches a signature of the transaction node to the transaction data, and eventually a final transaction node that the transaction data is transmitted to generates a transaction request. Alternatively, a transaction node can receive a signature sent by each other transaction node, and then generate a transaction request. For ease of description, descriptions are provided below by using an example that the transaction request includes signatures of a plurality of transaction nodes.

S102. Determine whether the transaction request is valid based on transaction data and a signature of each transaction node, and perform step S103 if the transaction request is valid, or perform step S104 if the transaction request is invalid.

In the present implementation of the present application, there are a plurality of methods for verifying the validity of the transaction request. For example, in Case 1, the regulatory node can score a credit capability of each transaction node that signs based on a credit record of each transaction node that is stored by the regulatory node, and determine that the transaction request is invalid if a score of the credit capability of each transaction node is less than a predetermined score, or determine that the transaction request is valid if a score of the credit capability of each transaction node is not less than a predetermined score. For another example, in Case 2, the regulatory node can alternatively use the transaction data, the signature of each transaction node, and a public key of each transaction node to verify whether the transaction node tampers with the transaction data or fraudulently uses an asset of another person. Certainly, there may be other cases of verifying the validity of the transaction request. Details are omitted here for simplicity.

In Case 2, the regulatory node can hold the public key of each transaction node in advance, or the transaction request can include the public key of each transaction node. The public key of each transaction node can be used to decrypt the signature of the transaction node to obtain the digest of the transaction data, thereby verifying whether a signer tampers with the transaction data. If a decryption result obtained by the regulatory node by decrypting the signature of the transaction node by using the public key provided by the transaction node is inconsistent with the digest of the transaction data, it indicates that the transaction node generates the signature by fraudulently using a private key of another blockchain node or the transaction node tampers with the transaction data, and therefore the transaction request is invalid. The validity of the transaction request can be further verified subsequently if no transaction node tampers with the transaction data.

In the present implementation of the present application, the subsequent validity verification can include the following: verifying whether the transaction node fraudulently uses an asset of another person. In a general blockchain network, an asset number of an asset owned by each blockchain node is associated with a public key of the blockchain node, and the public key that serves as an externally disclosed identity feature of the blockchain node can uniquely identify an identity of the blockchain node. In other words, an asset number associated with a public key of a blockchain node is an asset number actually owned by the blockchain node.

Therefore, in the present implementation of the present application, the regulatory node determines an asset number of an asset actually owned by each transaction node based on the public key of each transaction node, and then compares the asset number (the asset number used by the transaction node) that corresponds to the signature of the transaction node in the transaction data with the asset number actually owned by the transaction node to determine whether the transaction node maliciously and fraudulently uses an asset number owned by another blockchain node. The transaction request is invalid if at least one transaction node maliciously and fraudulently uses an asset number owned by another blockchain node. The transaction request is valid if the asset number used by each transaction node is the asset number owned by the transaction node.

In conclusion, it can be seen that, in Case 2 that the regulatory node verifies the validity of the transaction request, the verification is performed in a progressive way, and the following two aspects need to be confirmed successively to determine that the transaction request is valid: 1. The transaction data is not tampered with. 2. The transaction node does not fraudulently use an asset number owned by another blockchain node.

S103. Generate a privacy digest based on privacy data in the transaction data, and send the privacy digest and non-privacy data in the transaction data to each consensus node, so that each consensus node performs consensus verification.

In the present implementation of the present application, the specified data can be the privacy data, and the non-specified data can be the non-privacy data. The privacy data includes the privacy of the transaction node, and can be specified by the transaction node and notified to the regulatory node; or can be specified by the regulatory node. For example, the privacy data can include an identity of the transaction node, detailed content of an asset, and an account address, etc. that are considered as privacy of the transaction node.

As described above, the plaintext cannot be inversely derived from the digest of the plaintext. Therefore, after the digest is generated for the privacy data, the digest can be stored in a trusted blockchain, and the privacy data can be hidden, so that a trusted proof and record of the privacy data can be reserved, and the privacy data can be protected.

After receiving the digest and the non-privacy data, each consensus node can perform consensus verification based on the non-privacy data, for example, can verify whether there are duplicate expenses based on an asset number in the non-privacy data. If the consensus verification succeeds, the privacy digest and the non-privacy data are stored in the blockchain. The validity of the transaction request is verified and endorsed by the regulatory node in advance.

As such, the consensus verification on the transaction is completed. The digest stored in the blockchain can be used to verify whether privacy data claimed by a transaction node is true, to resolve a dispute between transaction nodes.

In the present implementation of the present application, the regulatory node can further send the signature of each transaction node to each consensus node, so that after the consensus verification performed by each consensus node on the transaction succeeds, the consensus node also stores the signature of each transaction node in the blockchain to prevent each transaction node from subsequently denying the signature.

In addition, in the present implementation of the present application, the regulatory node can instruct the at least one transaction node to store the transaction data or the specified data included in the transaction data if the transaction request is valid. Certainly, alternatively, the regulatory node can instruct the at least one transaction node to store the transaction data or the specified data in a private database that corresponds to the transaction node after the consensus verification performed by each consensus node on the transaction succeeds and after the digest is stored in the blockchain. In conclusion, each transaction node stores the specified data or the transaction data by itself. Implementations are not limited in the present application.

Although the transaction node can privately tamper with the specified data stored by the transaction node, the digest stored in the blockchain can be used to verify the authenticity of the specified data at any time, thereby avoid the risk caused by privately tampering with the specified data by the transaction node.

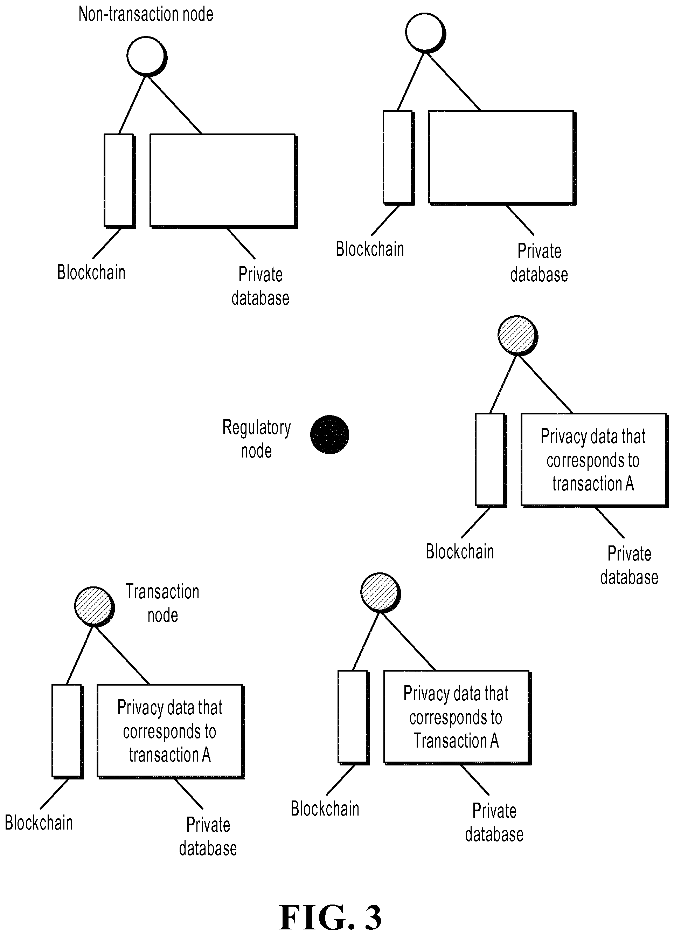

FIG. 3 is a schematic diagram illustrating a blockchain network, according to an implementation of the present application. As shown in the figure, in the blockchain network, each blockchain node maintains a blockchain, and each blockchain node has its own private database for storing privacy data of a transaction that the blockchain node participates in. For transaction A, only a private database of a blockchain node (a transaction node) that participates in transaction A stores privacy data that corresponds to transaction A, and a private database of a blockchain node (a non-transaction node) that does not participate in transaction A does not store the privacy data that corresponds to transaction A.

S104. Reject the transaction request.

According to the consensus verification method shown in FIG. 1, the regulatory node is responsible for verifying whether the transaction request is valid. If the transaction request is valid, the regulatory node generates the digest based on the specified data in the transaction data, and sends the digest and the non-specified data included in the transaction data to each consensus node for consensus verification. Each consensus node stores the digest and the non-specified data in the blockchain after the consensus verification succeeds. As such, the consensus node receives no specified data, and therefore does not store the specified data in the blockchain. As a result, the specified data is not disclosed. In addition, the digest can be used to verify whether the specified data that is not stored in the blockchain is tempered with.

In addition, for a particular blockchain network such as a consortium blockchain network, each blockchain node in the consortium blockchain network has a digital certificate issued by a certificate authority, where the digital certificate is used to endorse a real identity of the blockchain node. The digital certificate includes an identity (ID) of the blockchain node and a public key. Importantly, unlike a general blockchain network, in the consortium blockchain network, an asset number owned by the blockchain node is associated with the ID of the blockchain node.

In an application scenario of the consortium blockchain network, the regulatory node can obtain a digital certificate of the transaction node, and determine whether the transaction request is valid based on the digital certificate of the transaction node, the signature of each transaction node, and the transaction data.

The regulatory node can decrypt the signature of each transaction node based on a public key included in the digital certificate of the transaction node; and when determining that a decryption result that corresponds to each transaction node is the same as the digest of the transaction data, determine an asset number that corresponds to an identity based on the identity included in the digital certificate of each transaction node, and use the asset number as an asset number owned by the transaction node; and determine whether the transaction request is valid based on the asset number owned by each transaction node, the signature of each transaction node, and the transaction data; or determine that the transaction request is invalid when determining that a decryption result that corresponds to at least one transaction node is different from the digest of the transaction data.

Further, the regulatory node can determine an asset number that corresponds to the signature of each transaction node in the transaction data based on the signature of the transaction node, and use the asset number as an asset number used by the transaction node; determine that the transaction node is invalid if the asset number owned by the transaction node does not include at least one asset number used by the transaction node; or determine that the transaction node is valid if the asset number owned by the transaction node includes all asset numbers used by the transaction node; and determine that the transaction request is invalid when at least one transaction node is invalid; or determine that the transaction request is valid when all transaction nodes are valid.

That the transaction node is valid means that the transaction node does not commit a malicious illegal act (such as fraudulently using a signature of another person or fraudulently using an asset of another person). When it is determined that at least one asset number used by a transaction node in a current transaction is not an asset number owned by the transaction node, it can be considered that the transaction node commit an illegal act of fraudulently using an asset number of another person, and accordingly is invalid.

In other words, in the application scenario of the consortium blockchain network, the transaction node provides the digital certificate of the transaction node instead of the public key of the transaction node to the regulatory node. In addition, the asset number actually owned by the transaction node needs to be confirmed based on the ID of the transaction node. As such, there may be a slight difference in the two aspects described above that the regulatory node needs to confirm to verify the validity of the transaction request (1. The transaction data is not tampered with. 2. The transaction node does not fraudulently use an asset number owned by another blockchain node).

The regulatory node first attempts to decrypt the signature of each transaction node based on the public key included in the digital certificate of the transaction node. If the decryption result is consistent with the digest of the transaction data, it indicates that the transaction node does not tamper with the transaction data. After determining that identities of all transaction nodes are true, the regulatory node can continue to determine whether the asset number (namely, the asset number used by each transaction node in the transaction) that corresponds to the signature of each transaction node in the transaction data is an asset number of the transaction node, based on the asset number (namely, the asset number actually owned by the transaction node) that corresponds to the ID included in the digital certificate of the transaction node. It indicates that the transaction request is valid if no transaction node fraudulently uses an asset number of another person.

It is worthwhile to emphasize that, in the application scenario of the consortium blockchain network, the ID of the transaction node that is included in the digital certificate of the transaction node is actually the privacy of the transaction node. In the present implementation of the present application, the regulatory node does not send the digital certificate of the transaction node to the consensus node, thereby ensuring that the ID of the transaction node is not disclosed.

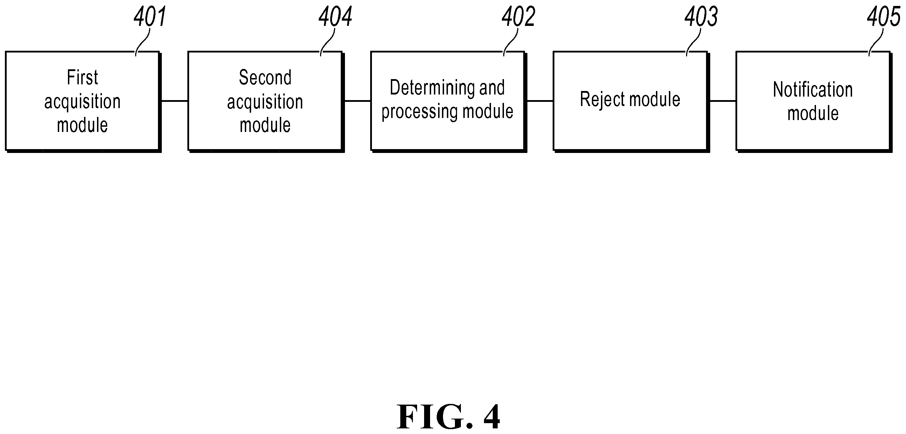

Based on the consensus verification method shown in FIG. 1, an implementation of the present application further correspondingly provides a consensus verification device. As shown in FIG. 4, the device includes the following: a first acquisition module 401, configured to obtain a transaction request, where the transaction request includes transaction data and a signature of at least one transaction node; and a determining and processing module 402, configured to determine whether the transaction request is valid based on the transaction data and a signature of each transaction node; and if the transaction request is valid, generate a digest based on specified data included in the transaction data, and send the digest and non-specified data included in the transaction data to each consensus node, so that each consensus node performs consensus verification.

The device further includes a reject module 403, configured to reject the transaction request if the transaction request is invalid.

The device further includes a second acquisition module 404, configured to obtain a digital certificate of each transaction node before it is determined whether the transaction request is valid based on the transaction data and the signature of each transaction node.

The determining and processing module 402 is configured to determine whether the transaction request is valid based on the transaction data, the signature of each transaction node, and the digital certificate of each transaction node.

The determining and processing module 402 is configured to decrypt the signature of each transaction node based on a public key included in the digital certificate of the transaction node; and when determining that a decryption result that corresponds to each transaction node is the same as the digest of the transaction data, determine an asset number that corresponds to an identity based on the identity included in the digital certificate of each transaction node, and use the asset number as an asset number owned by the transaction node; and determine whether the transaction request is valid based on the asset number owned by each transaction node, the signature of each transaction node, and the transaction data; or determine that the transaction request is invalid when determining that a decryption result that corresponds to at least one transaction node is different from the digest of the transaction data.

The determining and processing module 402 is configured to determine an asset number that corresponds to the signature of each transaction node in the transaction data based on the signature of the transaction node, and use the asset number as an asset number used by the transaction node; determine that the transaction node is invalid if the asset number owned by the transaction node does not include at least one asset number used by the transaction node; or determine that the transaction node is valid if the asset number owned by the transaction node includes all asset numbers used by the transaction node; and determine that the transaction request is invalid when at least one transaction node is invalid; or determine that the transaction request is valid when all transaction nodes are valid.

The device further includes a notification module 405, configured to instruct the at least one transaction node to store the transaction data or the specified data included in the transaction data if the transaction request is valid.

In the 1990s, whether a technical improvement is a hardware improvement (for example, an improvement to a circuit structure, such as a diode, a transistor, or a switch) or a software improvement (an improvement to a method procedure) can be clearly distinguished. However, as technologies develop, current improvements to many method procedures can be considered as direct improvements to hardware circuit structures. A designer usually programs an improved method procedure into a hardware circuit, to obtain a corresponding hardware circuit structure. Therefore, a method procedure can be improved by using a hardware entity module. For example, a programmable logic device (PLD) (for example, a field programmable gate array (FPGA)) is such an integrated circuit, and a logical function of the PLD is determined by a user through device programming. The designer performs programming to "integrate" a digital system to a PLD without requesting a chip manufacturer to design and manufacture an application-specific integrated circuit chip. In addition, at present, instead of manually manufacturing an integrated circuit chip, such programming is mostly implemented by using "logic compiler" software. The logic compiler software is similar to a software compiler used to develop and write a program. Original code needs to be written in a particular programming language for compilation. The language is referred to as a hardware description language (HDL). There are many HDLs, such as Advanced Boolean Expression Language (ABEL), Altera Hardware Description Language (AHDL), Confluence, Cornell University Programming Language (CUPL), HDCal, Java Hardware Description Language (JHDL), Lava, Lola, MyHDL, PALASM, and Ruby Hardware Description Language (RHDL). The very-high-speed integrated circuit hardware description language (VHDL) and Verilog are most commonly used. A person skilled in the art should also understand that a hardware circuit that implements a logical method procedure can be readily obtained once the method procedure is logically programmed by using the several described hardware description languages and is programmed into an integrated circuit.

A controller can be implemented by using any appropriate method. For example, the controller can be a microprocessor or a processor and a computer readable medium storing computer readable program code (such as software or firmware) that can be executed by the microprocessor or the processor, a logic gate, a switch, an application-specific integrated circuit (ASIC), a programmable logic controller, or a built-in microcontroller. Examples of the controller include but are not limited to the following microprocessors: ARC 625D, Atmel AT91SAM, Microchip PIC18F26K20, and Silicone Labs C8051F320. The memory controller can also be implemented as a part of the control logic of the memory. A person skilled in the art also knows that, in addition to implementing the controller by using the computer readable program code, logic programming can be performed on method steps to allow the controller to implement the same function in forms of the logic gate, the switch, the application-specific integrated circuit, the programmable logic controller, and the built-in microcontroller. Therefore, the controller can be considered as a hardware component, and a device included in the controller and configured to implement various functions can also be considered as a structure in the hardware component. Or the device configured to implement various functions can even be considered as both a software module implementing the method and a structure in the hardware component.

The system, device, module, or unit illustrated in the previous implementations can be implemented by using a computer chip or an entity, or can be implemented by using a product having a certain function. A typical implementation device is a computer. The computer can be, for example, a personal computer, a laptop computer, a cellular phone, a camera phone, a smartphone, a personal digital assistant, a media player, a navigation device, an email device, a game console, a tablet computer, a wearable device, or a combination of any of these devices.

For ease of description, the device above is described by dividing functions into various units. Certainly, when the present application is implemented, the functions of the units can be implemented in one or more pieces of software and/or hardware.

A person skilled in the art should understand that an implementation of the present disclosure can be provided as a method, a system, or a computer program product. Therefore, the present disclosure can use a form of hardware only implementations, software only implementations, or implementations with a combination of software and hardware. In addition, the present disclosure can use a form of a computer program product that is implemented on one or more computer-usable storage media (including but not limited to a disk memory, a CD-ROM, an optical memory, etc.) that include computer-usable program code.

The present disclosure is described with reference to the flowcharts and/or block diagrams of the method, the device (system), and the computer program product based on the implementations of the present disclosure. It is worthwhile to note that computer program instructions can be used to implement each process and/or each block in the flowcharts and/or the block diagrams and a combination of a process and/or a block in the flowcharts and/or the block diagrams. These computer program instructions can be provided for a general-purpose computer, a dedicated computer, a built-in processor, or a processor of another programmable data processing device to generate a machine, so that the instructions executed by the computer or the processor of the another programmable data processing device generate a device for implementing a specified function in one or more processes in the flowcharts and/or in one or more blocks in the block diagrams.

These computer program instructions can be stored in a computer readable memory that can instruct the computer or the another programmable data processing device to work in a certain way, so that the instructions stored in the computer readable memory generate an artifact that includes an instruction device. The instruction device implements a specified function in one or more processes in the flowcharts and/or in one or more blocks in the block diagrams.

These computer program instructions can be loaded onto the computer or the another programmable data processing device, so that a series of operations and operations and steps are performed on the computer or the another programmable device, thereby generating computer-implemented processing. Therefore, the instructions executed on the computer or the another programmable device provide steps for implementing a specified function in one or more processes in the flowcharts and/or in one or more blocks in the block diagrams.

In a typical configuration, a computing device includes one or more processors (CPU), one or more input/output interfaces, one or more network interfaces, and one or more memories.

The memory can include a non-persistent memory, a random access memory (RAM), a nonvolatile memory, and/or another form that are in a computer readable medium, for example, a read-only memory (ROM) or a flash memory (flash RAM). The memory is an example of the computer readable medium.

The computer readable medium includes persistent, non-persistent, movable, and unmovable media that can store information by using any method or technology. The information can be a computer readable instruction, a data structure, a program module, or other data. Examples of the computer storage medium include but are not limited to a parameter random access memory (PRAM), a static random access memory (SRAM), a dynamic random access memory (DRAM), another type of random access memory (RAM), a read-only memory (ROM), an electrically erasable programmable read-only memory (EEPROM), a flash memory or another memory technology, a compact disc read-only memory (CD-ROM), a digital versatile disc (DVD) or another optical storage, a cassette magnetic tape, a magnetic tape/magnetic disk storage or another magnetic storage device, or any other non-transmission medium. The computer storage medium can be used to store information accessible by the computing device. Based on the definition in the present specification, the computer readable medium does not include transitory computer readable media (transitory media) such as a modulated data signal and carrier.

It is worthwhile to further note that, the terms "include", "comprise", or their any other variants are intended to cover a non-exclusive inclusion, so a process, a method, a product or a device that includes a list of elements not only includes those elements but also includes other elements which are not expressly listed, or further includes elements inherent to such process, method, product or device. Without more constraints, an element preceded by "includes a ..." does not preclude the existence of additional identical elements in the process, method, product or device that includes the element.

A person skilled in the art should understand that an implementation of the present application can be provided as a method, a system, or a computer program product. Therefore, the present application can use a form of hardware only implementations, software only implementations, or implementations with a combination of software and hardware. In addition, the present application can use a form of a computer program product that is implemented on one or more computer-usable storage media (including but not limited to a disk memory, a CD-ROM, an optical memory, etc.) that include computer-usable program code.

The present application can be described in the general context of computer executable instructions executed by a computer, for example, a program module. Generally, the program module includes a routine, a program, an object, a component, a data structure, etc. executing a specific task or implementing a specific abstract data type. The present application can also be practiced in distributed computing environments. In the distributed computing environments, tasks are performed by remote processing devices connected through a communications network. In a distributed computing environment, the program module can be located in both local and remote computer storage media including storage devices.

The implementations in the present specification are described in a progressive way. For the same or similar parts of the implementations, references can be made to the implementations. Each implementation focuses on a difference from other implementations. Particularly, a system implementation is basically similar to a method implementation, and therefore is described briefly. For related parts, references can be made to related descriptions in the method implementation.

The previous implementations are implementations of the present application, and are not intended to limit the present application. A person skilled in the art can make various modifications and changes to the present application.

## Claims

1. A method for consensus verification, the method being performed by a regulatory node of a blockchain network and comprising:
obtaining (S101) a transaction request, wherein the transaction request comprises transaction data and a signature of at least one transaction node;
obtaining a digital certificate of each transaction node;
determining (S102) whether the transaction request is valid based on the transaction data, a signature of each transaction node, and the digital certificate of each transaction node;
in response to determining that the transaction request is valid, generating (S103) a digest based on specified data comprised in the transaction data; and
sending (S103) the digest and non-specified data comprised in the transaction data to each consensus node, so that each consensus node performs consensus verification;
wherein determining (S102) whether the transaction request is valid based on the transaction data, the signature of each transaction node, and the digital certificate of each transaction node comprises:
decrypting the signature of each transaction node based on a public key comprised in the digital certificate of the transaction node; and
in response to determining that a decryption result that corresponds to each transaction node is the same as the digest of the transaction data, determining an asset number that corresponds to an identity based on the identity comprised in the digital certificate of each transaction node;
determining the asset number as an asset number owned by the transaction node; and
determining whether the transaction request is valid based on the asset number owned by each transaction node, the signature of each transaction node, and the transaction data; or
determining that the transaction request is invalid when determining that a decryption result that corresponds to at least one transaction node is different from the digest of the transaction data.

2. The method according to claim 1, further comprising:
rejecting (SI04) the transaction request in response to determining that the transaction request is invalid.

3. The method according to any one of claims 1 or 2, wherein determining (S102) whether the transaction request is valid based on the asset number owned by each transaction node, the signature of each transaction node, and the transaction data comprises:
determining an asset number that corresponds to the signature of each transaction node in the transaction data based on the signature of the transaction node;
determining the asset number as an asset number used by the transaction node;
determining that the transaction node is invalid in response to determining that the asset number owned by the transaction node does not comprise at least one asset number used by the transaction node; or
determining that the transaction node is valid in response to determining that the asset number owned by the transaction node comprises all asset numbers used by the transaction node; and
determining that the transaction request is invalid in response to determining that at least one transaction node is invalid; or
determining that the transaction request is valid in response to determining that all transaction nodes are valid.

4. The method according to any one of claims 1 to 3, further comprising:
instructing the at least one transaction node to store the transaction data or the specified data comprised in the transaction data in response to determining that the transaction request is valid.

5. The method according to any one of claims 1 to 4, wherein the regulatory node is configured to regulate transactions by verifying items, wherein the items verified by the regulatory node are acknowledged by a plurality of blockchain nodes of the blockchain network.

6. The method according to claim 5, wherein the blockchain network comprises a consortium blockchain network.

7. A device for consensus verification, the device comprising a plurality of modules (401, 402, 403, 404, 405) configured to perform the method of any one of claims 1 to 6.

## Patentansprüche

1. Verfahren zur Konsens-Verifikation, wobei das Verfahren durch einen regulatorischen Knoten eines Blockchain-Netzwerks ausgeführt wird und Folgendes umfasst:
Erhalten (S101) einer Transaktionsanforderung, wobei die Transaktionsanforderung Transaktionsdaten und eine Signatur mindestens eines Transaktionsknotens umfasst;
Erhalten eines digitalen Zertifikats jedes Transaktionsknotens;
Bestimmen (S102), ob die Transaktionsanforderung gültig ist, auf der Basis der Transaktionsdaten, einer Signatur jedes Transaktionsknotens und des digitalen Zertifikats jedes Transaktionsknotens;
in Reaktion auf Bestimmen, dass die Transaktionsanforderung gültig ist, Erzeugen (S103) eines Digest auf der Basis von in den Transaktionsdaten enthaltenen vorgegebenen Daten; und
Senden (S103) des Digest und von nicht vorgegebenen Daten, die in den Transaktionsdaten enthalten sind, zu jedem Konsens-Knoten, so dass jeder Konsens-Knoten Konsens-Verifikation durchführt;
wobei Bestimmen (S102), ob die Transaktionsanforderung gültig ist, auf der Basis der Transaktionsdaten, der Signatur jedes Transaktionsknotens und des digitalen Zertifikats jedes Transaktionsknotens Folgendes umfasst:
Entschlüsseln der Signatur jedes Transaktionsknotens auf der Basis eines in dem digitalen Zertifikat des Transaktionsknotens enthaltenen öffentlichen Schlüssels; und
in Reaktion auf Bestimmen, dass ein Entschlüsselungsergebnis, das jedem Transaktionsknoten entspricht, dasselbe wie das Digest der Transaktionsdaten ist, Bestimmen einer Asset-Nummer, die einer Identität entspricht, auf der Basis der in dem digitalen Zertifikat jedes Transaktionsknotens enthaltenen Identität;
Bestimmen der Asset-Nummer als eine Asset-Nummer, die dem Transaktionsknoten gehört; und
Bestimmen, ob die Transaktionsanforderung gültig ist, auf der Basis der Asset-Nummer, die jedem Transaktionsknoten gehört, der Signatur jedes Transaktionsknotens und der Transaktionsdaten; oder
Bestimmen, dass die Transaktionsanforderung ungültig ist, wenn bestimmt wird, dass ein Entschlüsselungsergebnis, das mindestens einem Transaktionsknoten entspricht, von dem Digest der Transaktionsdaten verschieden ist.

2. Verfahren nach Anspruch 1, ferner umfassend:
Zurückweisen (S104) der Transaktionsanforderung, in Reaktion auf Bestimmen, dass die Transaktionsanforderung ungültig ist.

3. Verfahren nach einem der Ansprüche 1 oder 2, wobei Bestimmen (S102), ob die Transaktionsanforderung gültig ist, auf der Basis der Asset-Nummer, die jedem Transaktionsknoten gehört, der Signatur jedes Transaktionsknotens und der Transaktionsdaten Folgendes umfasst:
Bestimmen einer Asset-Nummer, die der Signatur jedes Transaktionsknotens in den Transaktionsdaten entspricht, auf der Basis der Signatur des Transaktionsknotens;
Bestimmen der Asset-Nummer als eine von dem Transaktionsknoten benutzte Asset-Nummer;
Bestimmen, dass der Transaktionsknoten ungültig ist, in Reaktion auf Bestimmen, dass die Asset-Nummer, die dem Transaktionsknoten gehört, mindestens eine von dem Transaktionsknoten benutzte Asset-Nummer nicht umfasst; oder
Bestimmen, dass der Transaktionsknoten gültig ist, in Reaktion auf Bestimmen, dass die Asset-Nummer, die dem Transaktionsknoten gehört, alle vom Transaktionsknoten benutzte Asset-Nummern umfasst; und
Bestimmen, dass die Transaktionsanforderung ungültig ist, in Reaktion auf Bestimmen, dass mindestens ein Transaktionsknoten ungültig ist; oder
Bestimmen, dass die Transaktionsanforderung gültig ist, in Reaktion auf Bestimmen, dass alle Transaktionsknoten gültig sind.

4. Verfahren nach einem der Ansprüche 1 bis 3, ferner umfassend:
Anweisen des mindestens einen Transaktionsknotens, die Transaktionsdaten oder die vorgegebenen Daten, die in den Transaktionsdaten enthalten sind, zu speichern, in Reaktion auf Bestimmen, dass die Transaktionsanforderung gültig ist.

5. Verfahren nach einem der Ansprüche 1 bis 4, wobei der regulatorische Knoten dafür ausgelegt ist, Transaktionen durch Verifizieren von Posten zu regulieren, wobei die durch den regulatorischen Knoten verifizierten Posten durch mehrere Blockchain-Knoten des Blockchain-Netzwerks bestätigt werden.

6. Verfahren nach Anspruch 5, wobei das Blockchain-Netzwerk ein Konsortium-Blockchain-Netzwerk umfasst.

7. Vorrichtung zur Konsens-Verifikation, wobei die Vorrichtung mehrere Module (401, 402, 403, 404, 405) umfasst, die dafür ausgelegt sind, das Verfahren nach einem der Ansprüche 1 bis 6 auszuführen.

## Revendications

1. Procédé de vérification de consensus, le procédé étant exécuté par un nœud de régulation d'un réseau de chaînes de blocs et comprenant :
l'obtention (S101) d'une demande de transaction, dans lequel la demande de transaction comprend des données de transaction et une signature d'au moins un nœud de transaction ;
l'obtention d'un certificat numérique de chaque nœud de transaction ;
la détermination (S102) du fait de savoir si la demande de transaction est valide sur la base des données de transaction, d'une signature de chaque nœud de transaction, et du certificat numérique de chaque nœud de transaction ;
en réponse à la détermination du fait que la demande de transaction est valide, la génération (S 103) d'un résumé sur la base de données spécifiées comprises dans les données de transaction ; et
l'envoi (S103) du résumé et de données non spécifiées comprises dans les données de transaction à chaque nœud de consensus, de manière à ce que chaque nœud de consensus effectue une vérification de consensus ;
dans lequel la détermination (S102) du fait de savoir si la demande de transaction est valide sur la base des données de transaction, de la signature de chaque nœud de transaction et du certificat numérique de chaque nœud de transaction comprend :
le décryptage de la signature de chaque nœud de transaction sur la base d'une clé publique comprise dans le certificat numérique du nœud de transaction ; et
en réponse à la détermination du fait qu'un résultat de décryptage qui correspond à chaque nœud de transaction est identique au résumé des données de transaction, la détermination d'un numéro d'actif qui correspond à une identité sur la base de l'identité comprise dans le certificat numérique de chaque nœud de transaction ;
la détermination du numéro d'actif en tant que numéro d'actif appartenant au nœud de transaction ; et
la détermination du fait de savoir si la demande de transaction est valide sur la base du numéro d'actif appartenant à chaque nœud de transaction, de la signature de chaque nœud de transaction, et des données de transaction ; ou
la détermination du fait que la demande de transaction est invalide lorsqu'il est déterminé qu'un résultat de décryptage qui correspond à au moins un nœud de transaction est différent du résumé des données de transaction.

2. Procédé selon la revendication 1, comprenant en outre :
le rejet (S104) de la demande de transaction en réponse à la détermination du fait que la demande de transaction est invalide.

3. Procédé selon l'une quelconque des revendications 1 ou 2, dans lequel la détermination (S102) du fait de savoir si la demande de transaction est valide sur la base du numéro d'actif appartenant à chaque nœud de transaction, de la signature de chaque nœud de transaction, et des données de transaction comprend :
la détermination d'un numéro d'actif qui correspond à la signature de chaque nœud de transaction dans les données de transaction sur la base de la signature du nœud de transaction ;
la détermination du numéro d'actif en tant que numéro d'actif utilisé par le nœud de transaction ;
la détermination du fait que le nœud de transaction est invalide en réponse à la détermination du fait que le numéro d'actif appartenant au nœud de transaction ne comprend pas au moins un numéro d'actif utilisé par le nœud de transaction ; ou
la détermination du fait que le nœud de transaction est valide en réponse à la détermination du fait que le numéro d'actif appartenant au nœud de transaction comprend tous les numéros d'actif utilisés par le nœud de transaction ; et
la détermination du fait que la demande de transaction est invalide en réponse à la détermination du fait qu'au moins un nœud de transaction est invalide ; ou
la détermination du fait que la demande de transaction est valide en réponse à la détermination du fait que tous les nœuds de transaction sont valides.

4. Procédé selon l'une quelconque des revendications 1 à 3, comprenant en outre :
le fait de donner l'instruction audit au moins un nœud de transaction de stocker les données de transaction ou les données spécifiées comprises dans les données de transaction en réponse à la détermination du fait que la demande de transaction est valide.

5. Procédé selon l'une quelconque des revendications 1 à 4, dans lequel le nœud de régulation est configuré pour réguler des transactions en vérifiant des éléments, dans lequel les éléments vérifiés par le nœud de régulation sont reconnus par une pluralité de nœuds de chaînes de blocs du réseau de chaînes de blocs.

6. Procédé selon la revendication 5, dans lequel le réseau de chaînes de blocs comprend un réseau de chaînes de blocs de consortium.

7. Dispositif de vérification de consensus, le dispositif comprenant une pluralité de modules (401, 402, 403, 404, 405) configurés pour mettre en œuvre le procédé selon l'une quelconque des revendications 1 à 6.
